# EUROPEAN PATENT APPLICATION

(11) **EP 3 372 069 A1**
(43) Date of publication of application: **12.09.2018**
(21) Application number: 18160549.4
(22) Date of filing: 07.03.2018
(51) Int. Cl.: A01G 9/04

(54) **PLANT TRAY AND METHOD OF USING THE PLANT TRAY**

(30) Priority: 08.03.2017 NL 2018485
(71) Applicant: Houdstermaatschappij Modiform B.V., 3831 KA Leusden (NL)
(72) Inventor: Smal, Gerardus Hendrikus, 3831 KA Leusden (NL)
(74) Representative: V.O.

(57) **Abstract**

Plant tray (1) comprising a series of columns (2) and/or sets of columns (2) of plant pockets (3), wherein at least two of said columns (2) and/or sets of columns (2) are movably connected to each other, such that they can move relative to each other between at least a first position in which they are relatively close to each other, preferably abutting, and a second position, in which they are spaced apart further than in the first position.

## Description

The invention relates to plant trays, such as for example trays for growing seedlings or plants, which trays can be used for growing, storage transport and/or display of seedlings and/or plants.

Plant trays are well known in the art and are commonly made of for example plastic, for example by injection moulding or, more usual, by thermos forming from a sheet of plastic material. Such plant tray commonly comprises a multitude of plant cells, for example positioned in straight or meandering columns or sets of such columns. Each of the cells is designed for receiving a seed or seedling or plant, for example with a ball of growing material, such that the seed, seedling or plant can grow out of said cell, whereas the tray can be handled with all seeds, seedlings and/or plants growing thereon.

When growing the seedlings and plants will increase in volume, especially above an upper surface area of the tray, by growing leaves, branches and/or flowers. This means that during growing the seedlings will need increasingly more space around the cell they grow in for proper development, for example for receipt of light and water, air and the like. In order to provide the seedlings and plants the necessary space they can grow from the start in relatively large cells and/or cells with relatively large distances in between them. This means however that the number of cells that can be provided per area of plant tray may be limited. Moreover this will mean that the trays require much space, even if the seedlings and/or plants are still relatively small compared to the size of the cells and/or the distances between the cells. For this reason it is common practice to transfer seedlings and/or plants during growing from one plant tray to another, sometimes more than once, the plan trays having increasing cell size and/or distances between cells. Such method is however time consuming and costly, requires different trays to be used for a set of seedlings and/or plants during growth, which again may be costly and environmentally unfriendly. Moreover, the individual seedlings or plants will have to be handled during growing, multiple times for transfer from one tray to another, which may be detrimental to the seedlings and/or plants.

An aim of the present disclosure is to provide for a plant tray which is an alternative to the known plant trays. An aim of the present disclosure is to provide for a method for cultivating growing elements such as seeds, seedlings or plants, as an alternative method. An aim of the present disclosure is to provide for a plant tray which during use negates or at least reduces at least some of the problems of known plant trays and methods in which they are used. An aim of the present disclosure is to provide for a plant tray which can provide for the ability of optimizing at least in part growing conditions, transport conditions and/or storage conditions for growing elements such as seeds, seedlings and/or plants, as well as methods to that effect.

In an aspect a plant tray according to the disclosure comprises a series of columns and/or sets of columns of plant pockets. At least two of said columns and/or sets of columns are movably connected to each other, such that they can move relative to each other between at least a first position in which they are relatively close to each other, preferably abutting, and a second position, in which they are spaced apart further than in the first position.

In an aspect a plant tray according to the disclosure comprises the said columns and/or sets of columns which are connected by connecting mechanisms allowing the movement between the first and second position. The connecting mechanisms can for example allow a sliding movement of at least one of said columns and/or sets of columns relative to at least one further column or set of columns.

In an aspect a plant tray according to the present disclosure can comprise vacuum formed and/or injection moulded parts comprising the plant pockets. The said columns can have the pockets in a substantially straight line, wherein the columns and/or sets of columns can have parallel longitudinal axis, both in the first and second position. Alternatively and/or additionally plant pockets in a column can be placed in a zig-zag or undulating pattern. Similarly rows of pockets can extend in a substantially straight line and/or for example in zig-zag or undulating patterns.

In embodiments the columns and/or sets of columns can be locked in at least the first position, preferably in the first and second position.

It should be noted that a column or set of columns of plant pockets in this disclosure can be understood as at least including a series of plant columns or a number of such series provided in and/or by an element, such as a sub tray.

In an aspect connecting elements, such as or comprising connecting mechanisms can extend below and/or between pockets.
In an aspect a plant tray according to the disclosure can be designed such that each of said columns or set of columns of plant pockets is provided in or by a tray portion having an upper surface portion adjacent to the upper edge of the relevant plant pockets, which surface has at least two longitudinal edges substantially parallel to a longitudinal direction of the relevant column or columns of plant pockets of said tray part. At least two guide elements can be provided, having a longitudinal direction extending substantially perpendicular to said side edges and/or the longitudinal direction of the relevant column or columns, wherein at least one of said tray parts is slidingly connected to at least one of said guide elements, such that said tray part can be slid along said guide element between the first and second position.

In further elucidation embodiments and parts thereof according to the disclosure shall be discussed hereafter, with reference to the drawings. Therein shows:
Fig. 1 a tray according to the disclosure, in perspective view, in a closed position;
Fig. 2 schematically in perspective view the tray of fig. 1, in open position;
Fig. 2A schematically a column of pockets along a zig-zag line;
Fig. 3 schematically in side view a tray according to the disclosure, in side view, in closed position;
Fig. 4 schematically the embodiment of fig. 3, in side view, in open position;
Fig. 5 schematically in bottom view a tray of the disclosure, in closed position;
Fig. 6 schematically in bottom view a tray of fig. 5, in open position;
Fig. 7 schematically in partial cross section in a side view part of a tray, with plants in a closed position;
Fig. 8 schematically the tray of fig. 7 in open position;
Fig. 9 schematically a detail of a tray of the disclosure, in cross section, showing a part of a connecting provision, for sliding;
Fig. 10 schematically an alternative detail of a tray of the disclosure, in cross section, showing a part of a connecting provision, for sliding; and
Fig. 11 schematically an alternative connecting mechanism of a tray according to the disclosure.

In this description embodiments are shown and disclosed of the invention, by way of example only. These should by no means be interpreted or understood as limiting the scope of the present invention in any way. In this description the same or similar elements are indicated by the same or similar reference signs. In this description embodiments of the present invention shall be discussed with reference to trays suitable for holding plants. However, the same or similar trays could also be used in the present invention for other growing products, such as seeds, seedlings and the like.

In this description references to above and below, top and bottom and the like shall be considered, unless specifically stipulated differently, to a normal orientation of a tray in a position for holding plants or the like in pockets or cells thereof.

In the embodiments shown trays shall be shown and discussed which can be manufactured using a vacuum forming and/or pressing method. However also other methods can be used, individually or in combination with vacuum forming and/or pressing, such as but not limited to injection moulding. Trays according to the disclosure are preferably made of plastic, such as but not limited to plastic sheet, which may be single or multiple layered. However, also other materials could be used, such as for example but not limited to cardboard, such as plasticized cardboard, foam or the like materials.

In this description reference will be made to plant pockets, which may also be referred to as pockets or cells. In this description a plant pocket may be understood as a space adapted for receiving a volume of growing medium, such as but not limited to earth, glass- or rockwool, oasis, granulate, combinations thereof, such that a plant, seed or seedling or the like can grow in or on said medium in and/or from said plant pocket. Plantpockets may be defined at least in part by one or more walls, for example a peripheral wall or set of walls, and/or a bottom provision, such as for example a bottom wall, which may be closed or may comprise one or more openings for ingress and/or egress of water. Several plant pockets may be interconnected, for example by channels, such that water can flow from one pocket to a next, or may be fluidly separated from each other.

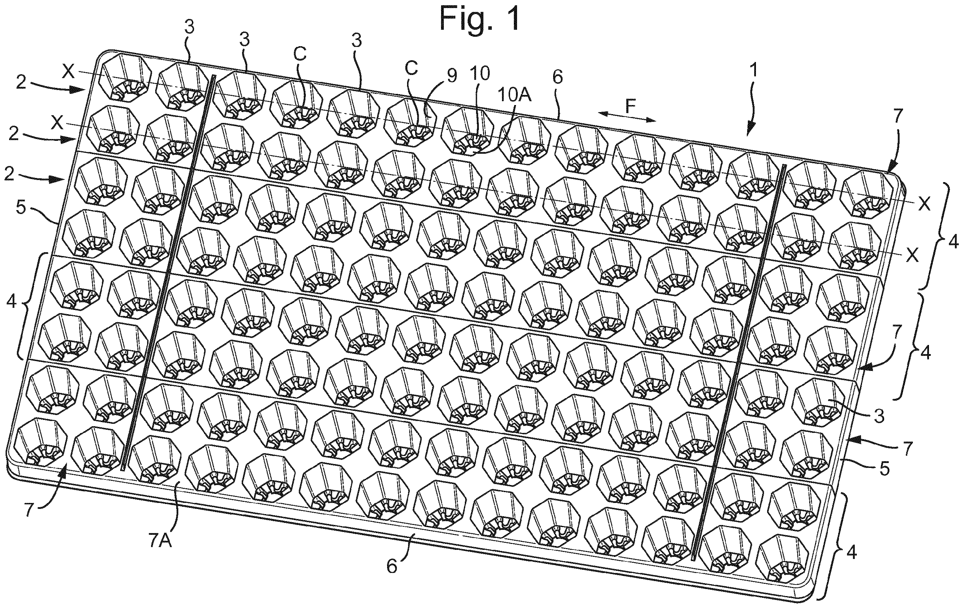

Fig. 1 shows a plant tray 1 comprising a series of columns 2 plant pockets 3. In the embodiment shown the tray in fig. 1 comprises 8 such columns 2. As will be discussed in this embodiment the columns 2 of pockets are grouped in sets 4 of two such columns 2. However, they can also be individual columns 2 or can be grouped in sets of different numbers of columns, such as three or more, whereas in a tray sets 4 can be provided having different numbers of columns 2.

In this description a column of plant pockets 3 can be understood at least as a series of pockets 3 positioned along a line X - X extending through a center C of each pocket 3, said line X - X extending between two opposite sides 5 of the tray 1. Such line X - X can for example be a straight line or a zig-zag line. Preferably the pockets 3 in a column 2 are positioned such that if the line X - X is a zig-zag line, two parallel straight lines Y can be drawn through centers C of a first and of a second set of pockets 3, wherein the shortest distance d between said straight lines Y is less than a maximum of twice the maximum cross section W of the largest plant pocket 3 in said column measured in a directed normal to said two lines Y, preferably once said cross section W or less. Preferably the plant pockets 3 in a column 2 are all substantially the same size, and placed in a regular pattern.

In embodiments the column 2 can have the pockets 3 in a substantially straight line X - X, wherein the columns 2 and/or sets 4 of columns 2 have parallel longitudinal axis, both in the first and second position, for example defined by said lines X - X through the centers C of the pockets 3.

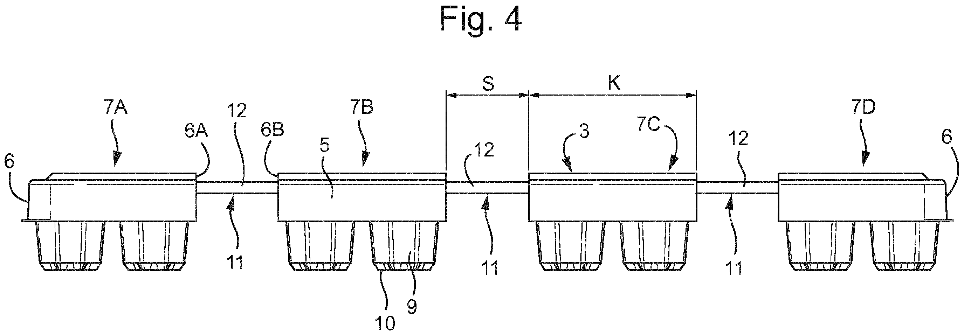

As indicated in the embodiment shown in fig. 1- 4 , four sets 4 of columns 2 of plant pockets 3 can be provided, by way of example. Each column 2 in this embodiment is straight and has 14 pockets. Hence such tray 1 can for example comprise 8 times 14 cells. In this embodiment shown the plat tray 1 is substantially rectangular, having straight opposite first sides 5 and straight opposite second sides 6. Obviously other numbers of cells 3 can be provided in a tray 1, and other numbers of columns 2. In the embodiment shown the cells 3 are placed in a regular matrix of cells when the tray is closed, as shown in fig. 1. Each set 4 of columns 2 of cells 3 is provided in or formed by an element 7, for example vacuum formed. In the embodiment shown each pocket 3 has a octagonal shape with a side wall 9 and a bottom 10 with a central opening 10A. The wall 9 is slightly inclined, such that the pocket 3 encloses a substantially frusto conical volume V. The walls 9 of the pockets 3 in the elements 7 are interconnected by a top surface 7A, which can for example be a substantially flat surface formed by part of a same sheet from which the pockets are formed.

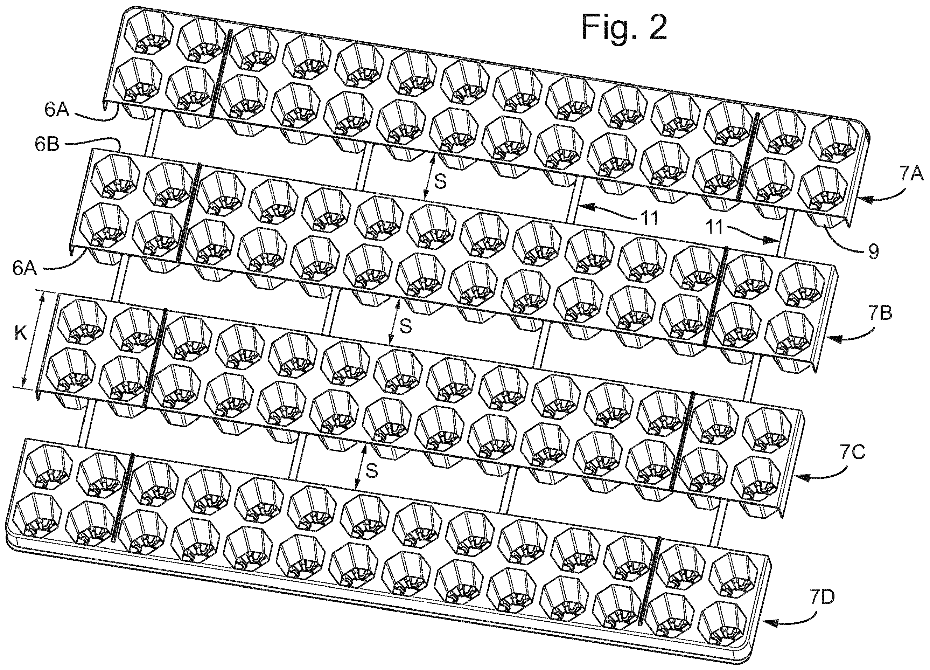

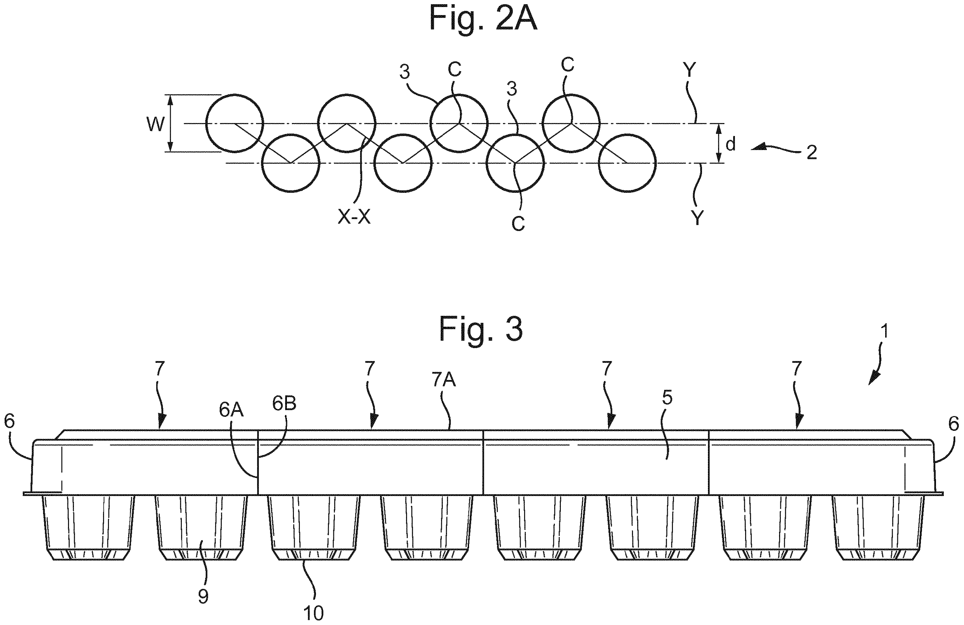

At least two of said columns 2 or, in the embodiment shown, sets 4 of columns 2 are movably connected to each other, such that they can move relative to each other between at least a first position in which they are relatively close to each other, as shown in fig. 1, preferably abutting, and a second position, as shown in fig. 2, in which they are spaced apart further than in the first position. In this description the first position may also be referred to as closed position, the second position as open position.

In the embodiments shown sets 4 of columns 2 are movable between the open and closed position and vice versa by moving, especially translating the elements 7 relative to each other in a direction perpendicular to a main direction F of the columns 2, e.g. perpendicular to the second sides 6 and/or parallel to the first sides 5. In the closed position opposite edges 6A, 6B of two adjacent elements may substantially abut, whereas in the open position said edges 6A, 6B may be apart over a distance S. The distance S may for example be between 0.1 and 4 times the shortest distance K between opposite edges 6A, 6B of an element 7, preferably between 0.2 and 1 time said distance K. In embodiments the difference in distance between adjacent columns and/or sets of columns between the first and second position, i.e. the distance S can be substantially equal to or larger than a width K of the pocket with the smallest width, measured in the direction perpendicular to a longitudinal direction of said columns and/or set of columns.

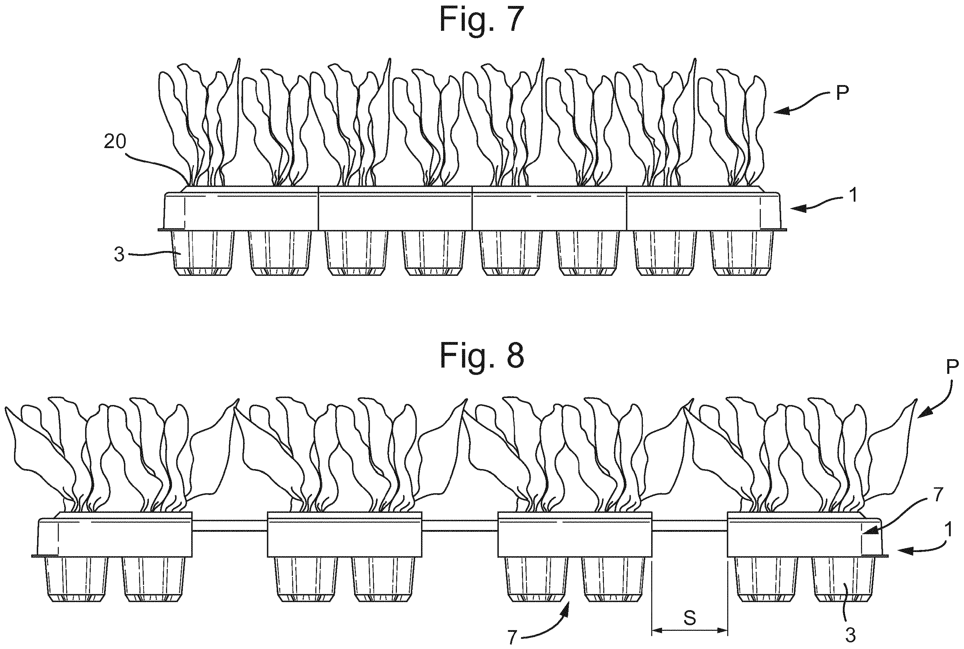

As can for example be seen in fig. 7 and 8, the open position provides for more space for plants P, especially for leaves, flowers and branches of such plants P. Moreover the plants can easier be reached, for example for watering, light, air, fertilizer, other treatment and the like. By bringing the tray 1 in the closed position at least temporarily the pockets 2 and, if present, plants P can be brought closer together. In the closed position the outer dimensions of the tray 2 will be significantly smaller than in the open position, which makes it easier and less costly and space consuming for storage and transport.

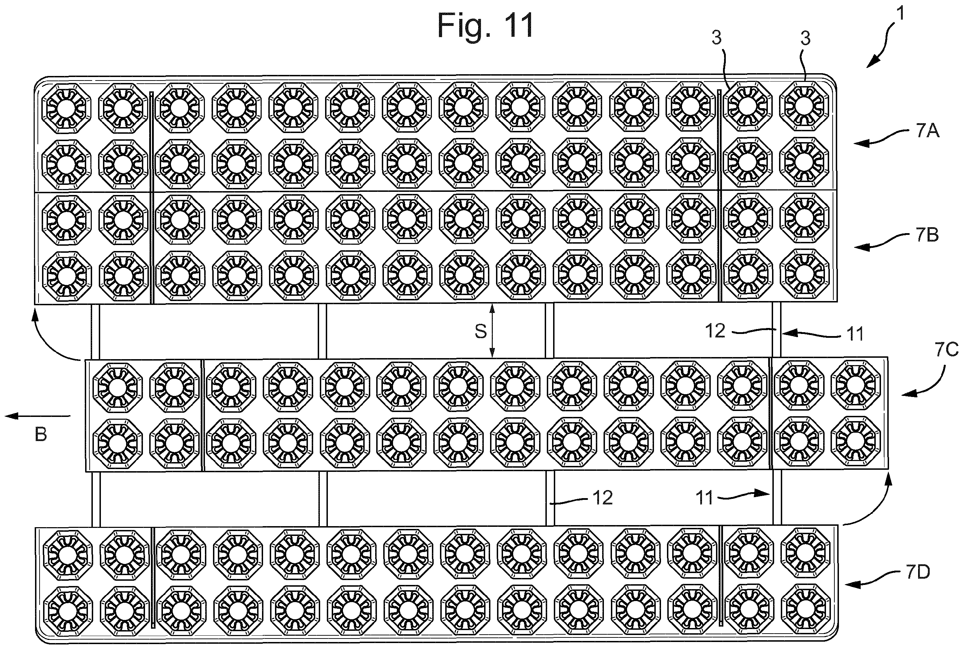

The sets 4 of columns 2 are connected by connecting mechanisms 11 allowing the movement between the first and second position. In the embodiment of fig. 1 and 2 the connecting mechanisms 11 allow a sliding movement of at least one of said sets 4 of columns 2 relative to at least one further set 4 of columns 2. Alternatively or additionally connecting mechanisms 11 can be provided which comprise an alternative mechanism, for example at least one pivoting mechanism as schematically shown in fig. 11.

In fig. 11 a tray 1 is shown partially in the open position. Again four elements 7A, B, C and D are shown, by way of example, each comprising two columns 2. In fig. 11 the third element 7C is brought into an "open" position in that the adjacent elements 7B and 7D are spaced apart from it over a distance S. The elements 7 are connected to each other by connecting elements 12, such as rods, pivoting relative to the elements 7, such that for example by pushing the element 7C in fig. 11 to the right, relative to the other elements 7, the connecting elements pivot and allow the element 7C to be brought into the open position, whereas pushing it the other way, indicated by arrow B, the elements 11 will again pivot, for example to a position substantially parallel to the edges 6A, 6B of the elements, pulling the elements 7B, 7C and 7D against each other again, to bring the tray into the closed position.

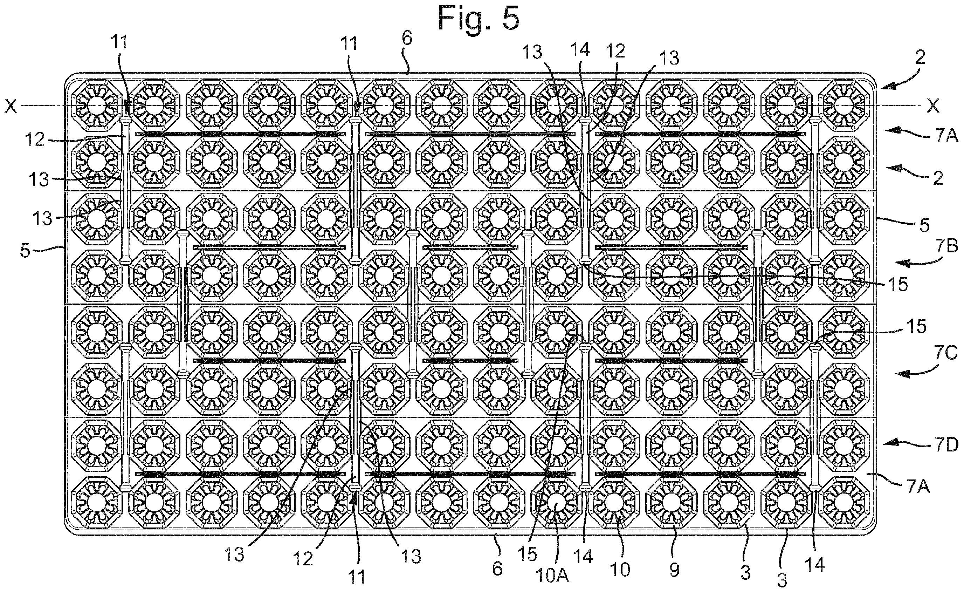

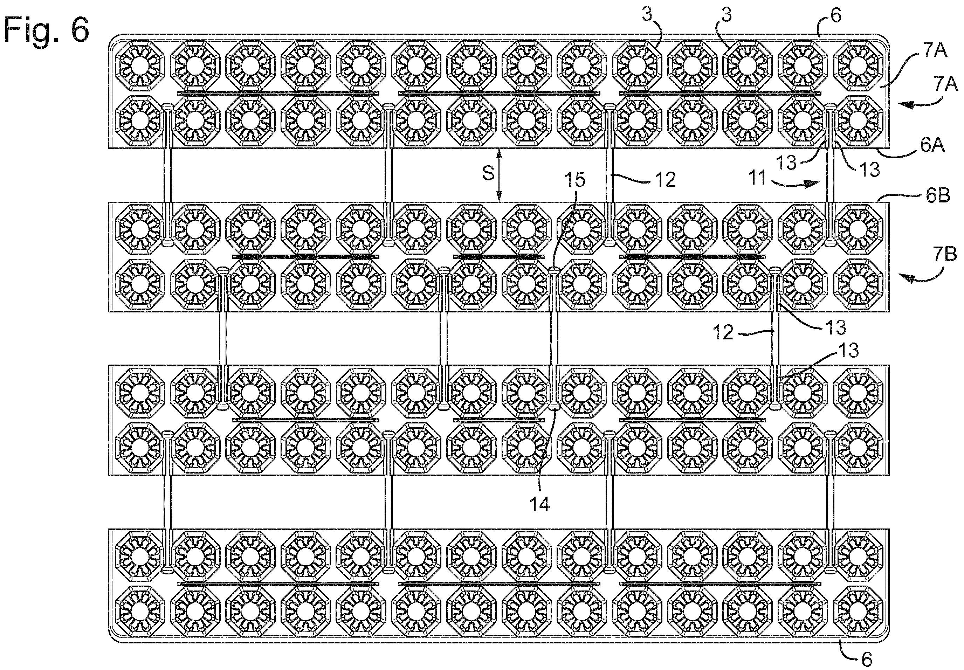

Fig. 5 and 6 schematically show an underside of a tray 1, in closed and in open position respectively. As can be seen in this embodiment each mechanism 11 can comprise a sliding element 12, such as for example a rod, extending below the surface 7A, between pockets 3. At least one end 14 of each of said sliding elements 12 is slidably engaged by an engaging element 13 connected to one of two adjacent elements 7, whereas an opposite end 15 of said sliding element 12 is connected to another of said two adjacent elements 7, either fixed or movable too. Hence by sliding at least the one end 14 relative to the engaging element 13 will allow a translation, such as a sliding movement of the relevant one element 7 relative to the said adjacent element 7 is allowed.

In embodiments the second end 15 can be fixed relative to the relevant element 7, for example by integral forming or by bonding, riveting, gluing, welding or otherwise connecting the two permanently. In other embodiments the two ends 14, 15 are both engaged by an engagement element 13, said engagement elements connected to or formed by the two adjacent elements 7, such that sliding of the sliding element 12 is possible relative to both of said elements 7, as shown in fig. 5 and 6.

In embodiments the sliding element 12 and/or engagement element or elements 15 can be provided with stop and/or locking provisions for locking the elements in the first and/or second position and/or for limiting movement of the elements to said distance S in the second position and the abutting position or closed position.

The mechanisms 11 are preferably designed such that the tray filled with plants can be lifted in its entirety, at least in the closed position and preferably also in the open position. In embodiments this can be obtained by providing the or each engagement element 13 substantially as a channel extending along a longitudinal length M of the sliding element 12, which length M is for example at least a sixth, more preferably at least a fifth, more preferably at least a quarter of the length L₁₂ of the element 12. Preferably the or each engagement element 13 is positioned close to or directly adjacent to an edge 6A, 6B of an element 7, such that in the closed position the sliding element 12 extends from one of said elements 7 directly into the engagement element 13 provided on the other of the two elements 7. In the embodiment of fig. 5 and 6 each end 14, 15 is engaged by an engagement element 13, both being adjacent an edge 6A, 6B, such that these engagement elements 13 are abutting or at least close to each other in the closed position of the tray 1. The sliding element 12 can be provided with widened end or ends 14A, 15A which cannot pass the relevant engagement element, thus forming a stop to the sliding movement, as discussed.

In a practical embodiment the sliding element 12 can for example be a hollow tube, provided with trumped up ends 14A, 15A or by providing a wider head 14B, 15B at one or each of said ends 14, 15.

As can be seen in the drawings, between each set of two adjacent elements 7 more than one such mechanism 11 can be provided, for example two, three, four or more. The mechanisms 11 between two adjacent elements 7 can be positioned in a staggered position relative to the mechanisms 11 between one of said two elements and a further adjacent element, as shown in fig. 5 and 6, or in line therewith, as for example shown in fig. 2.

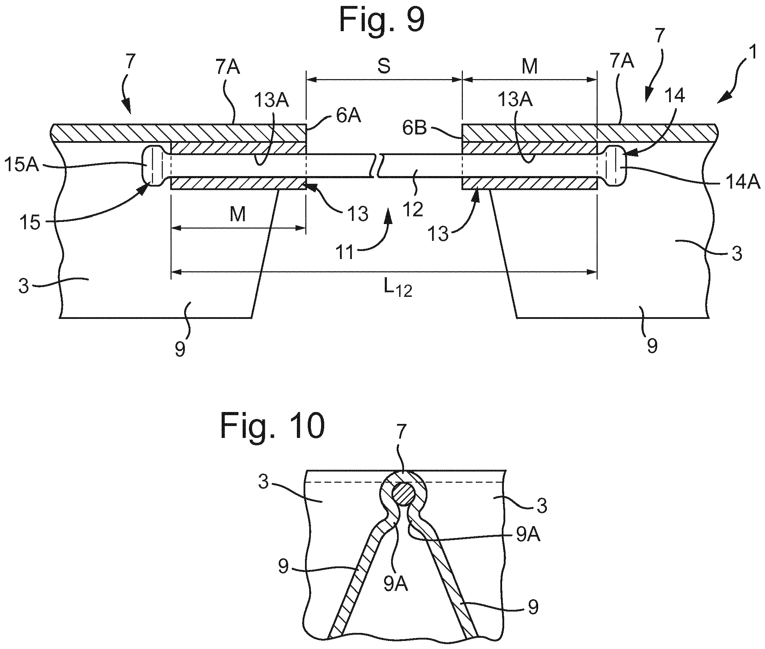

In embodiments the or each engagement element 13 can be connected to the relevant element 7, extending between the walls 9 of adjacent pockets 3 and can for example be connected to said walls and/or a surface area 7A in between them. The or each engaging element 13 can comprise a tubular channel 13A extending there through, slidingly engaging an outer surface of the sliding element 12. Such is for example shown in some detail in fig. 9. Said channel can have a closed circumferential wall or said wall can be partly open, for example by providing as slit over its length, such that the element 12 can be pushed into said channel 13A through said slit by temporarily elastically widening said slit.

The engaging elements 13 can for example be, but not limited to, injection moulded. In embodiments the engagement elements 13 can be formed by or at least include parts of for example a wall 9 of a pocket or pockets 3 and/or for example part of a surface element 7A. For example as shown in fig. 10. In such embodiment for example the relevant walls 9 can comprise a bulge 9A such that the element 12 can be slidably clamped between said bulges 9A and the surface 7A.

In embodiments adjacent columns 2 and/or sets of columns 3 can be provided with compatible retaining elements which are coupled in the first position and uncoupled in the second position. For example elements 7 can be provided at or near adjacent or facing edges 6A, 6B with such retaining elements, such as for example click fingers which can click over and/or below an edge 6A, 6B, for resiliently locking such elements 7 together in the closed position, but releasing for bringing the tray in the second position.

In embodiments, such as for example discussed here before, each of said columns or set of columns of plant pockets can be provided in or by a tray portion 7 having an upper surface portion 7A adjacent to the upper edge of the relevant plant pockets, which surface 7A has at least two longitudinal edges 6A, 6B substantially parallel to a longitudinal direction X - X of the relevant column or columns 2 of plant pockets 3 of said tray part 7. At least two guide elements 12 can be provided, having a longitudinal direction L₁₂ extending substantially perpendicular to said side edges 6A, 6B and/or the longitudinal direction X - X of the relevant column or columns 2, wherein at least one of said tray parts 7 is slidingly connected to at least one of said guide elements 12, such that said tray part 7 can be slid along said guide element 12 between the first and second position.

In embodiments at least two guide elements 12 can be connected to a first tray part 7 in a fixed, non sliding position, whereas at least an adjacent second tray part 7 is slidingly connected to said guide elements 12. In embodiments a first one of the guide elements 12 can be fixedly connected to a first tray part 7 and slidingly connected to a second tray part 7, whereas a second guide element 12 is slidingly connected to the first tray part 7 and fixedly connected to the second tray part. Alternatively at least two tray 7 parts are slidingly connected to the at least two guide elements 12.

A plant tray 1 of the present disclosure can for example be used as follows. A grow medium 20 is provided in the plant pockets 3 of at least two of said columns 2 and/or sets of columns 2. A seed or seedling or other grow element P is planted or provided in each of said plant pockets, for example planted in said medium or introduced in the plant pocket with said medium 20. Prior to and/or after providing the seed or seedling or such grow element and/or the medium 20 the plant tray 1 can be placed in or on a transport device (not shown) and/or in storage provisions with the columns and/or sets of columns in the first position. Such transport devices can for example be trucks, carts, transport conveyers or the like, as known in the art. Storage facilities are also well known in the art and can for example comprise carts, tables, trucks, conveyers and the like. As discussed, in said first position the outer dimensions of the tray can be relatively small compared to the dimensions in the second position and can be conform standards used in the field, as for example established by Normpack®, The Netherlands.

The plant tray 1 may be taken from storage or transport facility and be placed in a plant breeding environment. In such position the plant tray may be placed in the first position for a first period of time, for example during initial breeding of a seed or seedling to a larger plant. Thereafter the tray 1 may be brought in the second position, for further breeding of the plants, providing them with more space. Obviously the tray can also directly be placed in the second position.

After a period of breeding the plant tray 1 may be manipulated back into the first position, such that columns and/or sets of columns 2, especially the elements 7 are brought back closer together. Then for example the tray 1 with the plants can be placed into a transport device or storage facility. It should be noted that in embodiments of such method the elements 7 and thus the relevant columns 2 and/or sets 4 of columns 2 can be brought from the first into the second position gradually during breeding of the plants, or in a single go.

Various methods can be used for manufacturing a tray 1 according to the disclosure. For example a tray can be vacuum formed from a sheet or injection moulded or compression moulded, comprising all pockets of all columns, as an integral tray. Then the thus formed tray can be divided into a series of elements 7, for example by cutting, punching, slicing, sawing, breaking or any such technique. Each element 7 will comprise an appropriate number of pockets 3. Then the elements 7 can be interconnected by the connecting mechanisms, for forming the tray 1 according to the present disclosure. Alternatively the elements 7 can be made individually, for example by vacuum forming from a sheet, and then be connected by said mechanisms 11. In a further method the elements 7 and mechanisms 11 could be made integrally, for example by injection moulding, compression injection moulding or vacuum forming.

The invention is by no means limited to the embodiments specifically disclosed or discussed here before. Many other embodiments are possible within the scope as defined by the claims, including but not limited to all combinations or elements and features thereof. For example, each element 7 can comprise another number of columns, for example one each, or different numbers of columns. For example one or more elements 7 can have a single column 2, other elements 7 comprising multiple columns. Plant pockets can be designed to comprise a series of seeds, seedlings or plants each. In embodiments plant pockets can be formed at least in part by separate elements such as pots that can be inserted into holding provisions such as openings in the elements, such that the separate elements can be placed in and removed from the elements 7. This enables easy reusable trays 1 with for example disposable pockets cq pots. Connecting mechanisms 11 can be designed differently, as long as they allow movement of elements 7 of the tray between the first and second position and/or between the second and first position. A plant tray 1 of the disclosure can have a different direction of movement between first and second positions, for example at an angle relative to edges of the tray.

These and various other embodiments should be considered as falling within the scope of the claims.

## Claims

1. Plant tray comprising a series of columns and/or sets of columns of plant pockets, wherein at least two of said columns and/or sets of columns are movably connected to each other, such that they can move relative to each other between at least a first position in which they are relatively close to each other, preferably abutting, and a second position, in which they are spaced apart further than in the first position.

2. Plant tray according to claim 1, wherein the columns and/or sets of columns are movable between the first and second position in a direction substantially perpendicular to a longitudinal direction of at least one of said columns or sets of columns.

3. Plant tray according to claim 1 or 2, wherein the said columns and/or sets of columns are connected by connecting mechanisms allowing the movement between the first and second position, wherein the connecting mechanisms preferably allow a sliding movement of at least one of said columns and/or sets of columns relative to at least one further column or set of columns.

4. Plant tray according to claim 3, wherein the connecting mechanisms comprise at least one pivoting mechanism.

5. Plant tray according to any one of the previous claims, wherein the said columns have the pockets in a substantially straight line, wherein the columns and/or sets of columns have parallel longitudinal axis, both in the first and second position.

6. Plant tray according to any one of the previous claims, wherein the columns and/or sets of columns can be locked in at least the first position, preferably in the first and second position.

7. Plant tray according to any one of the previous claims, wherein the columns and/or sets of columns are provided in or by individual elements, wherein the elements are preferably vacuum formed or injection moulded elements.

8. Plant tray according to any one of the previous claims, wherein connecting elements, such as or comprising connecting mechanisms according to any one of claims 3-4, extend below and/or between pockets.

9. Plant tray according to anyone of the previous claims, wherein adjacent columns and/or sets of columns are provided with compatible retaining elements which are coupled in the first position and uncoupled in the second position.

10. Plant tray according to any one of the preceding claims, wherein the difference in distance between adjacent columns and/or sets of columns between the first and second position is substantially equal to or larger than a width of the pocket with the smallest width, measured in the direction perpendicular to a longitudinal direction of said columns and/or set of columns.

11. Plant tray according to any one of claims 1-10, wherein;
- each of said columns or set of columns of plant pockets is provided in or by a tray portion having an upper surface portion adjacent to the upper edge of the relevant plant pockets, which surface has at least two longitudinal edges substantially parallel to a longitudinal direction of the relevant column or columns of plant pockets of said tray part;
- wherein at least two guide elements are provided, having a longitudinal direction extending substantially perpendicular to said side edges and/or the longitudinal direction of the relevant column or columns, wherein at least one of said tray parts is slidingly connected to at least one of said guide elements, such that said tray part can be slid along said guide element between the first and second position.

12. Plant tray according to claim 11, wherein
- at least two guide elements are connected to a first tray part in a fixed, non sliding position, whereas at least an adjacent second tray part is slidingly connected to said guide elements; and/or
- a first one of the guide elements is fixedly connected to a first tray part and slidingly connected to a second tray part, whereas a second guide element is slidingly connected to the first tray part and fixedly connected to the second tray part; and/or
- at least two tray parts are slidingly connected to the at least two guide elements.

13. Plant tray according to claim 12, wherein at least one of the tray parts and/or at least one of the guide elements is provided with a stop for limiting the movement of tray parts relative to each other.

14. Method for use of a plant tray according to any one of the previous claims, wherein;
- a grow medium is provided in the plant pockets of at least two of said columns and/or sets of columns;
- a seed or seedling or other grow element is planted or provided in each of said plant pockets;
- the plant tray is placed in or on a transport device with the columns and/or sets of columns in the first position;
- the plant tray is taken from the transport device and is placed in a plant breeding environment with columns and/or sets of columns in the second position; or
- the plant tray is taken from the transport device and placed in a plant breeding environment in the first position, whereafter columns and/or sets of columns are brought into the second position.

15. Method according to claim 14, wherein after a period of breeding the plant tray is manipulated such that columns and/or sets of columns are brought back towards the first position, whereafter the tray is placed into a transport device or storage facility.

16. Method according to claim 14 or 15, wherein the relevant columns and/or sets of columns are brought from the first into the second position gradually during breeding of the plants.
